# EUROPEAN PATENT SPECIFICATION

(11) **EP 3 903 133 B1**
(45) Date of publication and mention of the grant of the patent: **26.08.2026**
(21) Application number: 19905696.1
(22) Date of filing: 19.12.2019
(51) Int. Cl.: G02B 5/18, G02B 6/34

(54) **OPTICAL FIBER DEVICES AND METHODS FOR SUPPRESSING STIMULATED RAMAN SCATTERING (SRS)**
FASEROPTISCHE VORRICHTUNGEN UND VERFAHREN ZUR UNTERDRÜCKUNG DER STIMULIERTEN RAMAN-STREUUNG (SRS)
DISPOSITIFS À FIBRE OPTIQUE ET PROCÉDÉS DE SUPPRESSION DE DIFFUSION RAMAN STIMULÉE (SRS)

(30) Priority: 28.12.2018 US 201862786169 P
(43) Date of publication of application: 03.11.2021
(73) Proprietor: nLIGHT, Inc., Camas, WA 98607 (US)
(72) Inventor: LOWDER, Tyson L., Vancouver, Washington 98665 (US); KLINER, Dahv A.V., Vancouver, Washington 98665 (US); FANNING, C. Geoffrey, Vancouver, Washington 98665 (US)
(74) Representative: Murgitroyd & Company
(86) International application number: PCT/US2019/067544
(87) International publication number: WO 2020/139704

(56) References cited:
- WO-A1-2018/217307
- US-A1- 2003 161 582
- US-A1- 2005 191 007
- US-A1- 2005 191 007
- US-A1- 2010 103 959
- US-A1- 2011 310 913
- US-A1- 2015 003 772
- US-A1- 2016 164 247
- US-A1- 2018 217 322
- US-B2- 6 845 194

## Description

### CLAIM FOR PRIORITY

This application claims priority to U.S. Provisional Patent Application Serial No. 62/786,169, filed on December 28, 2018 and titled "Optical Fiber Devices and Methods for Suppressing Stimulated Raman Scattering (SRS) Light Through Guided Mode Coupling".

### BACKGROUND

The fiber laser industry continues to increase laser performance metrics, such as average power, pulse energy and peak power. Pulse energy and peak power are associated with the storage and extraction of energy in the fiber while mitigating nonlinear processes that can have adverse impacts on the temporal and spectral content of the output pulse. Stimulated Raman Scattering (SRS) light is the result of one such nonlinear process associated with quantum effects and/or vibrations of the fiber media (e.g., glass). SRS is therefore typically an undesired byproduct of fiber laser and/or fiber amplifier signal light passing through the optical fibers that make up these systems.

Generation of SRS light can reduce power in an intended signal output wavelength. SRS generation can also destabilize laser emission resulting in undesired output power fluctuations. SRS generation may also have detrimental effect on the spatial profile of laser system emission. SRS may also be re-introduced in laser and amplifier systems by reflections from objects internal to, or external to, the laser system, such as optics used to manipulate the laser or amplifier output, or the workpiece to which the laser light output is applied. Such reflections can also destabilize the laser emission. Once generated, a laser and/or amplifier of a fiber system may amplify SRS light to the point of causing catastrophic damage to components internal to the system (e.g., a fiber laser, or fiber amplifier). The SRS light may also be detrimental to components external to the fiber system because the external components may not be specified for the wavelength of the SRS light. This mismatch in wavelength between what is delivered versus what is expected can lead to undesirable performance at the workpiece or may cause an eye safety concern for the external system in which the fiber system was integrated. As such, it may be desirable to suppress SRS generation within a fiber system, remove SRS light from a fiber system, and/or otherwise mitigate one or more of the undesirable effects of SRS.

US 2010/103959 A1 describes a few-mode fiber amplifier with a wavelength-sensitive mode coupler and a mode filter.

### Summary

Accordingly there is provided a fiber-optic device and a method of filtering Raman spectrum as detailed in the claims that follow.

### BRIEF DESCRIPTION OF THE DRAWINGS

The material described herein is illustrated by way of example and not by way of limitation in the accompanying figures. For simplicity and clarity of illustration, elements illustrated in the figures are not necessarily drawn to scale. For example, the dimensions of some elements may be exaggerated relative to other elements for clarity. Further, where considered appropriate, reference labels have been repeated among the figures to indicate corresponding or analogous elements. In the figures:
FIG. 1A is a flow chart illustrating methods for selectively coupling Raman spectrum energy between guided modes of a fiber;
FIG. 1B is a schematic of a device to selectively couple Raman spectrum energy between guided modes of a fiber;
FIG. 2A and 2B are longitudinal and transverse cross-sectional views of a fiber;
FIG. 3 is a chart of different linearly polarized (LP) modes that Raman spectrum may be coupled between;
FIG. 4A is a longitudinal cross-sectional view of a fiber length that includes a fiber Grating (FG);
FIG. 4B is a transverse cross-sectional view through one portion of the FG illustrated in FIG. 4A in accordance with a symmetric FG;
FIG. 4C is a transverse cross-sectional view through one portion of the FG illustrated in FIG. 4A in accordance with an asymmetric FG;
FIG. 5A is a schematic of a device to selectively remove Raman spectrum energy from a fiber system;
FIG. 5B is a schematic of a device to selectively remove Raman spectrum energy from a fiber system according to the claimed invention;
FIG. 5C is a flow chart illustrating methods of selectively removing Raman spectrum energy from a fiber system according to the claimed invention;
FIG. 6 is an isometric view of a fiber mode filter suitable for filtering higher order mode (HOM) from a system through bend losses;
FIG. 7A and 7B are cross-sectional views of fiber with the optical fiber axis in the plane of the page;
FIG. 8 depicts a cross-sectional view of a differential fiber splice between a single mode fiber and a multi-mode fiber;
FIG. 9 depicts a cross-sectional view of a fiber tapered to support single mode and multi-mode propagation within different fiber lengths;
FIG. 10A is a schematic of a fiber system comprising an optical resonator, an optical amplifier, a Raman spectrum propagation mode coupler, and a mode filter; and
FIG. 10B is a schematic of a fiber system comprising an optical resonator, an optical amplifier, a Raman spectrum propagation mode coupler, and a mode filter, in accordance with an embodiment of the claimed invention.

### DETAILED DESCRIPTION

Reference is made in the following detailed description to the accompanying drawings.

The term "luminance" is a photometric measure of the luminous intensity per unit area of light travelling in a given direction. The term "numerical aperture" or "NA" of an optical system is a dimensionless number that characterizes the range of angles over which the system can accept or emit light. The term "optical intensity" is not an official (SI) unit, but is used to denote incident power per unit area on a surface or passing through a plane. The term "power density" refers to optical power per unit area, although this is also referred to as "optical intensity" and "fluence." The term "radial beam position" refers to the position of a beam in a fiber measured with respect to the center of the fiber core in a direction perpendicular to the fiber axis. The term "radiance" is the radiation emitted per unit solid angle in a given direction by a unit area of an optical source (e.g., a laser). Radiance may be altered by changing the beam intensity distribution and/or beam divergence profile or distribution. The term "refractive-index profile" or "RIP" refers to the refractive index as a function of position along a line (1D) or in a plane (2D) perpendicular to the fiber axis. Many fibers are azimuthally symmetric, in which case the 1D RIP is identical for any azimuthal angle. The term "optical power" is energy per unit time, as is delivered by a laser beam, for example. The term "guided light" describes light confined to propagate within an optical waveguide. The term "core mode" is a guided propagation mode supported by a waveguide within one or more core of an optical fiber. The term "cladding mode" is a guided propagation mode supported by a waveguide within one or more cladding layer of an optical fiber. The term "mode coupler" is a device that couples one propagation mode of a waveguide to another propagation mode of a waveguide.

Described herein are optical fiber devices, systems, and methods suitable for one or more of suppressing SRS generation within a fiber system, removing SRS light from a fiber system, and/or otherwise mitigating one or more of the undesirable effects of SRS within a fiber system.

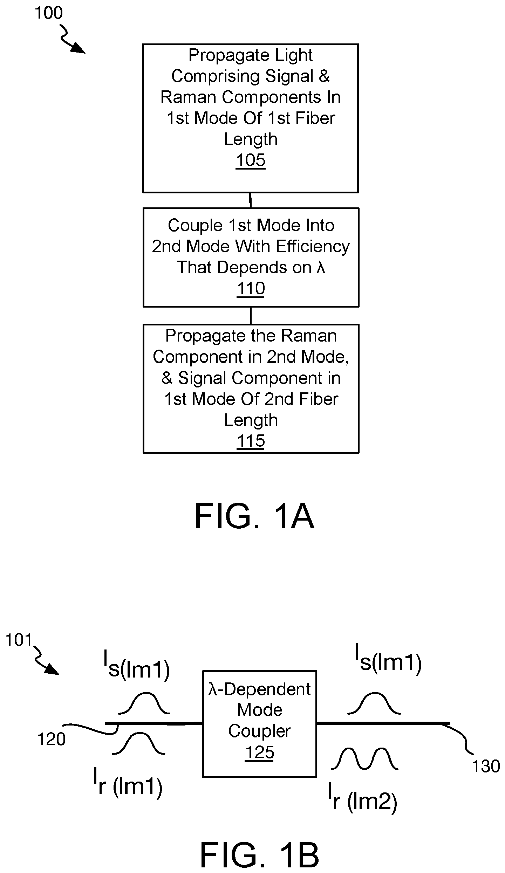

Light can be propagated by an optical fiber predominantly in a first mode, a Raman component Iᵣ, or a signal component Iₛ, is selectively coupled into a second propagation mode supported by the fiber. FIG. 1A illustrates methods 100 for selectively coupling Raman spectrum energy between guided modes of an optical fiber. Methods 100 begin at block 105 where light is propagated over a first length of fiber predominantly in a first guided mode. The light propagated at block 105 has both a signal component Iₛ and a Raman component Iᵣ. At block 110, light is coupled into a second guided mode with a mode coupling efficiency that is a function of wavelength. For the two components Iᵣ, Iₛ, the dominant modes of propagation within a fiber are separated by a difference in the efficiency of the mode coupling between component wavelengths λᵣ, λₛ. At block 110 the dominant propagation mode of the Raman component Iᵣ is coupled to another mode selectively to the signal component Iₛ. For this, methods 100 continue at block 115 where the signal component Iₛ is propagated predominantly in the first mode through a second length of fiber, while the Raman component Iᵣ is propagated through the second length of fiber predominantly in one or more modes other than the first mode. It is noted techniques and/or devices similar to those provided may be employed to instead selectively couple the signal component Iₛ from a first mode into a second mode. In either implementation, with the Raman component propagating in a different mode than the signal component the Raman component may experience lower gain from the signal component as a result of relatively lower overlap between their modes. Mode-based filtering may also then be utilized, for example to increase propagation losses for the Raman component.

FIG. 1B is a schematic of a device 101 to selectively couple Raman spectrum energy between guided modes of a fiber. Device 101 may be operable to perform methods 100, for example. As shown, device 101 includes a propagation mode coupler 125 coupled to receive light propagating in a first fiber length 120, and coupled to pass light propagating in a second fiber length 130. Light propagated within both fiber lengths 120 and 130 may comprise a signal component Iₛ and a Raman component Iᵣ. The signal component Iₛ has some range of intensities over a predetermined signal spectrum comprising one or more signal wavelengths (e.g., with a micrometer center wavelength, such as 1050nm, etc.). Similarly, the Raman component Iᵣ has some range of some intensity over a Raman spectrum. According to the claimed invention, the Raman component Iᵣ can be expected to span wavelengths longer than those of the signal component Iₛ (e.g., a Raman-shifted center wavelength, such as 1100nm, etc.). The Raman component Iᵣ may also have a wider band than the signal component Iₛ.

As shown, both the signal component Iₛ and the Raman component Iᵣ propagates in a first guided mode lm₁ of fiber length 120. In some examples, the first guided mode is a linear polarized mode LP₁ₘ, being the linearly polarized fundamental transverse mode of the optical fiber, LP₀₁. LP₀₁, which has desirable characteristics in terms of beam shape, minimal beam expansion during propagation through free space (often referred to as "diffraction limited"), and optimum focus-ability. Hence, fundamental mode LP₀₁ propagation is often advantageous in the fiber laser industry.

A wavelength sensitive propagation mode coupler 125 is to couple at least some of the light in the first (core) guided mode into a second (core) guided mode supported by fiber length 130. Propagation mode coupler 125 is wavelength sensitive and therefore has a mode coupling efficiency over the Raman spectrum that is different from that over the signal spectrum. According to the claimed invention, propagation mode coupler 125 has higher mode coupling efficiency within the Raman spectrum than within the signal spectrum, and therefore may be considered "Raman-selective," or a "Raman" propagation mode coupler. Although, propagation mode coupler 125 may employ free-space optics, in some exemplary embodiments propagation mode coupler 125 is a fiber mode coupler comprising a length of fiber. In some embodiments, propagation mode coupler 125 is embedded within a length of fiber substantially the same as fiber length 130, as described in greater detail elsewhere herein.

Fiber length 130 is suitable for supporting at least two guided modes (i.e., fiber length 130 comprises multi-mode, or MM fiber). Signal component Iₛ is to propagate in the first guided mode lm₁ (e.g., LP₀₁) of fiber length 130, while the Raman component Iᵣ is to propagate in the second guided mode lm₂. According to the claimed invention, the second guided mode lm₂ is a higher order mode than the first mode lm₁. For example, where the first guided mode is the fundamental transverse mode, the second guided mode lm₂ may be any higher-order mode (HOM). Raman spectrum propagation mode coupler 125 may couple between the first propagation mode and one or more second propagation modes (e.g., any number of HOM). In some exemplary embodiments, fiber length 120 comprises single-mode (SM) fiber. However, fiber length 120 may also support multiple guided modes (MM fiber), in which case light may also be propagated in more than one first mode (e.g., lmᵢ) within fiber 120. For such embodiments light is then to be propagated in at least one additional mode (e.g., lmᵢ₊₁) with fiber length 130.

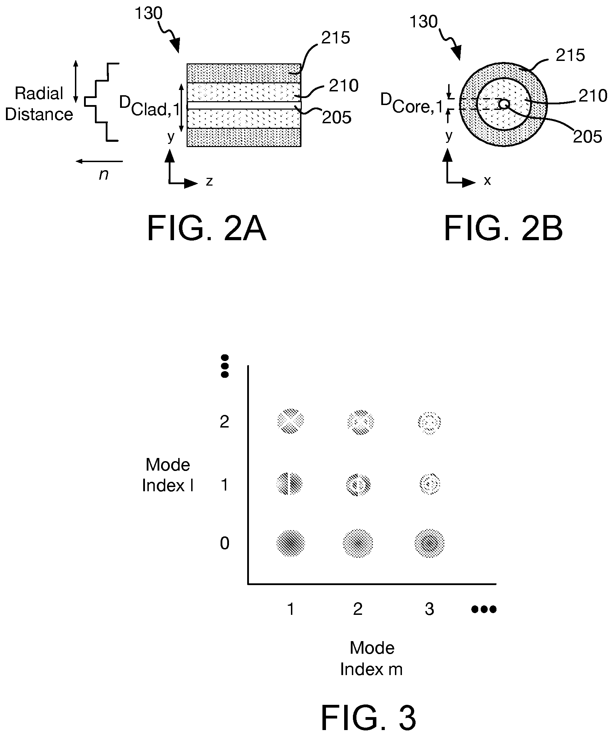

FIG. 2A and 2B are longitudinal and transverse cross-sectional views of fiber length 130, respectively. Although a double clad fiber embodiment is illustrated, fiber length 130 may have any number of cladding layers (e.g., single, triple, etc.) known to be suitable for optical fiber. In the example illustrated in FIG. 2A and 2B, fiber length 130 has a central core 205, and an inner cladding 210, which is annular and encompasses central core 205. An annular outer cladding 215 surrounds inner cladding 210. Core 205 and inner cladding 210 may have any suitable composition (e.g., glass). Outer cladding 215 may be a polymer or also glass, for example. Although not depicted, one or more protective (non-optical) coatings may further surround outer cladding 215.

Fiber length 130 may have any suitable refractive index profile (RIP). As used herein, the "refractive-index profile" or "RIP" refers to the refractive index as a function of position along a line (e.g., x or y axis in FIG. 2B) or in a plane (e.g. x-y plane in FIG. 2B) perpendicular to the fiber axis (e.g., z-axis in FIG. 2A). In the example shown in FIG. 2B, the RIP is radially, or rotationally, symmetric, in which case the RIP is identical at any azimuthal angle. Alternatively, for example as for birefringent fiber architectures, RIP may vary as a function of azimuthal angle. Core 205, inner cladding 210, and outer cladding 215 can each have any RIP, including, but not limited to, a step-index and graded-index. A "step-index fiber" has a RIP that is substantially flat (refractive index independent of position) within fiber core 205. Inner cladding 210 may also have a substantially flat RI over D_{Clad,1}, with a RIP of fiber length 130 stepped at the interface between core 205 and inner cladding 210. An example of one illustrative stepped RIP suitable for a fiber laser is shown in FIG. 2A. Alternatively, one or more of core 205 and inner cladding 210 may have a "graded-index" in which the RI varies (e.g., decreases) with increasing radial position (i.e., with increasing distance from the core and/or cladding axis).

In accordance with embodiments not according to the claimed invention, core 205 is operable for multi-mode propagation of light. With sufficient core diameter D_{core,1}, and/or NA contrast, fiber length 130 supports the propagation of more than one transverse optical mode. Fiber length 130 may comprise large mode area (LMA) fiber that is operable in an LMA regime, or fiber length 130 may comprise strongly multi-mode fiber that supports hundreds of modes within core 205. For LMA fiber, the number of modes supported in a fiber generally scales with V-number. The V-number is proportional to core diameter D_{core,1} and the core numerical aperture (NA), and is inversely proportional to the wavelength(s) of the light propagating in the fiber (e.g., *λₛ*- *λ*_{R}). In some LMA embodiments, the number of modes supported by core 205 is given by roughly one half the square of the V-number. It can be shown that a fiber with a V-number less than about 2.4 supports the propagation of only the fundamental mode while optical fibers having a V-number over 2.4, can support several optical modes.

Referring still to FIG. 2A and 2B, inner cladding 210 may have an area larger than that of the core 205, and may also have a higher NA. Cladding 210 may also support a large number of propagation modes. Nevertheless, in accordance with some embodiments not according to the claimed invention, mode coupler 125 is to couple the Raman component Iᵣ into a core mode (i.e., a guided mode). Although core 205 and inner cladding 210 is illustrated as being concentric (i.e., a centered core), they need not be. One or more of core 205 and inner cladding 210 may also be a variety of shapes other than circular, such as, but not limited to annular, polygonal, arcuate, elliptical, or irregular. Core 205 and inner cladding 210 in the figures are co-axial, but may alternatively have axes offset with respect to one another. Although D_{Clad,1} and D_{Core,1} are illustrated to be constants about a central fiber axis in the longitudinal direction (z-axis in FIG. 2A). The diameters D_{Clad,1} and D_{Core,1} may instead vary over a longitudinal fiber length 130. In some exemplary embodiments not according to the claimed invention, the core diameter D_{Core,1} is in the range of 10-100 micron (µm) and the inner cladding diameter D_{Clad,1} is in the range of 200-1000µm, although other values for each are possible.

In further reference to device 101 (FIG. 1B), fiber length 120 may have any of the properties described above for fiber length 130. In some embodiments not according to the claimed invention, fiber length 120 has substantially the same core and cladding architecture as fiber length 130. For example, fiber length 120 may also comprise double-clad fiber. Fiber length 120 may be substantially identical to fiber length 130, for example having the same core and cladding architecture, compositions, and dimensions (e.g., diameters). For such embodiments, fiber length 120 also supports multiple guided modes. Alternatively, where fiber length 120 comprises single mode fiber (e.g., V-number < 2.4), one or more property of the core (e.g., NA or diameter) within fiber length 120 differs from (e.g., is smaller than) that of fiber length 130.

FIG. 3 is a chart depicting a subset of linearly polarized (LP) modes between which a mode coupler may propagate Raman spectrum. For embodiments according to the claimed invention, where a Raman component Iᵣ is propagated in fundamental mode (e.g., LP₀₁), the Raman component Iᵣ may be coupled into any of the higher 0^{th} order modes (e.g., LP₀₂, LP₀₃), any of the 1^{st} order modes (e.g., LP₁₁), or any even higher order modes (HOM) (e.g., LP₂₁). In some embodiments, mode coupler 125 is to preferentially couple a Raman component Iᵣ propagating in the fundamental mode (e.g., LP₀₁) into an odd-ordered mode (e.g., LP₁₁). A given HOM may have more or less spatial overlap with the LP₀₁ mode. Generally, an odd-ordered HOM (e.g., LP₁₁) will have less spatial overlap with the LP₀₁ mode than does an even-ordered HOM. Although Raman component Iᵣ may be coupled from the fundamental mode into more than one HOM, when a fiber system further includes a propagation mode filter, the dominant mode to which the Raman component Iᵣ is coupled is advantageously an odd-ordered mode.

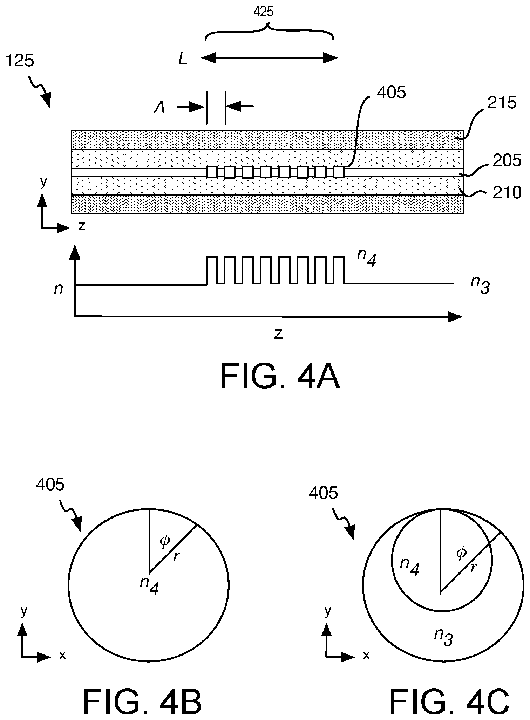

Raman propagation mode coupler 125 may take a variety of forms. Some exemplary fiber mode couplers comprise a length of multi-mode fiber that further includes a fiber grating (FG). In contrast to a bend, a FG may induce mode coupling (e.g. from the fundamental mode to HOM) that is sufficiently wavelength selective to distinguish between Raman spectrum and signal spectrum. The FG may have a variety of architectures, including, but not limited to a fiber Bragg grating (FBG), and a long-period fiber grating (LPFG). FG embodiments may be designed with a variety of architectures that are operable to couple a given spectral bandwidth (e.g., Raman component Iᵣ) from a first guided mode (e.g., LP₀₁) to a second, counter-propagating reflected mode (e.g., LP₁₁). FIG. 4A is a longitudinal cross-sectional view of a length of fiber that includes an exemplary mode coupler 125 that further comprises a fiber grating 425, in accordance with some embodiments. Fiber grating 425 is to interact with the core modes electric field. This can be direct interaction or more evanescently. Fiber grating 425 can therefore be in the cladding or even comprise external surface perturbations. In the example shown, fiber grating 425 comprises refractive index (RI) perturbations 405 within at least fiber core 205 over a grating length L. In the example, RI perturbations 405 have a refractive index(n₄) that is higher than a nominal core RI (n₃). For embodiments where outer cladding 215 has an RI of n₁, and inner cladding 210 has an RI of n₂, RI within propagation mode coupler 125 may vary as n₁<n₂<n₃<n₄. For FBG embodiments, RI perturbations 405 may impact light guided within core 205 over only a narrow range of wavelengths that satisfy a Bragg condition. Light at other wavelength where a Bragg condition is not satisfied may be substantially unaffected by RI perturbations 405. Bandwidth for a FBG may be only 1-5nm, for example, which may be tuned to target a center wavelength of a Raman component Iᵣ, and reflect at least a portion of Raman spectrum into a higher-order counter propagating mode.

RI perturbations 405 are illustrated to have a period of A. Grating period A may vary according to implementation. For FBG embodiments operable to reflect the Raman component Iᵣ into high-order counter propagating mode(s), grating period A may be short, for example no more than half of a center Raman wavelength (e.g., 200-400 nm). For LPFG embodiments that are to couple light into co-propagating HOM modes that are also supported by central core 205, grating period A may be greater than half of the center Raman wavelength. In some of these embodiments, grating period A is two or more times half the center Raman wavelength, for example ranging from 100-1000 µm. Although a fixed period fiber grating is illustrated in FIG. 4A, aperiodic (i.e., chirped), apodized, or superstructure grating embodiments may also be suitable implementations of a fiber mode coupler. For example, chirped embodiments of either Bragg or long-period grating architectures may offer a wider spectral response (e.g., >5 nm) than their periodic counterparts. Apodized embodiments of either Bragg or long-period grating architectures may, for example, improve mode separation of the Raman spectrum from signal spectrum. Superstructure embodiments may include a variety of grating structures (e.g., including both chirp and apodization structures).

A mode coupling efficiency associated Raman mode coupler 125 may depend not only on the amplitude of RI modulation and the grating length L, but also on a three-dimensional shape of the grating. In some embodiments, a mode coupler comprises a cylindrically, or rotationally, symmetric grating with RI perturbations being independent of azimuthal angle (e.g., substantially orthogonal to the fiber axis) and/or core radius. FIG. 4B is a transverse cross-sectional view through one portion of fiber grating 425 in accordance with a rotationally symmetric grating embodiment. As shown, within an x-y plane of an RI perturbation 405 the index is independent of azimuthal angle *φ* and core radius *r* (e.g., RI being n₄ everywhere within the x-y plane). In some alternative embodiments, a Raman propagation mode coupler comprises a cylindrically asymmetric grating with RI perturbations that are dependent on azimuthal angle (e.g., slanted from orthogonal to the fiber axis) and/or core radius. FIG. 4C is a transverse cross-sectional view through one portion of fiber grating 425, in accordance with cylindrically (rotationally) asymmetric, or slanted, FG embodiments. As shown, the index may be dependent on azimuthal angle *φ* (e.g., varying from n₃ to n₄) and/or core radius r within an x-y plane of RI perturbation 405.

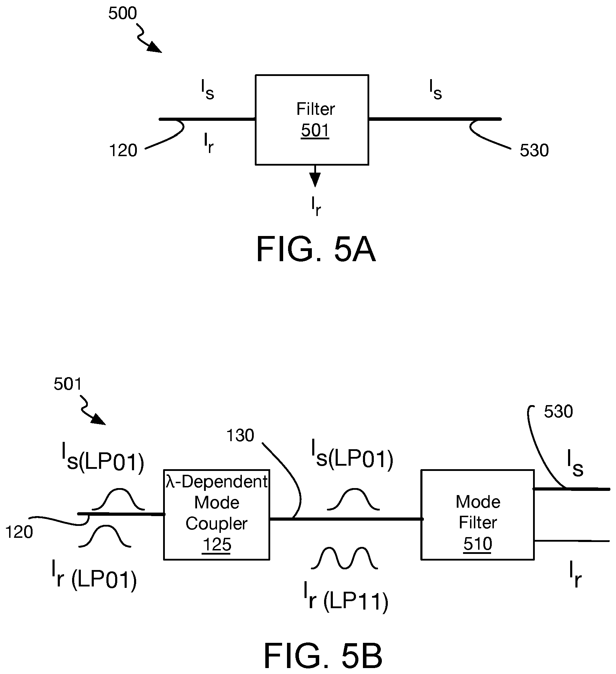

FIG. 5A is a schematic of a fiber device 500 to selectively remove Raman spectrum energy from a fiber system, in accordance with some embodiments. Fiber device 500 includes a Raman filter 501 coupled to receive light propagated in fiber length 120 that again includes both signal and Raman components Iₛ, Iᵣ. Raman filter 501 is operative to discriminate the Raman component Iᵣ from the signal component Iₛ, upon which the Raman component Iᵣ may be selectively routed to a destination different than that of the signal component Iₛ, which is to propagate in fiber length 530. As a result of filtering, light propagated within fiber length 530 has a reduced Raman component Iᵣ. Once filtered, Raman component Iᵣ may be selectively dissipated and/or suppressed.

In some embodiments, Raman filter 501 includes a Raman wavelength sensitive propagation mode coupler operable to selectively couple Raman spectrum energy into one or more guided modes that are other than the dominant mode of the signal spectrum energy. Raman filter 501 further includes a propagation mode filter, distinct from the Raman propagation mode coupler, which is further operable to discriminate between at least one guided mode propagating the Raman spectrum, and at least one guided mode propagating the signal spectrum. The architecture of Raman filter 501 is in contrast to a filter that employs a device that is to unguide some spectrum from the core, for example into a guided cladding mode, or completely out of the fiber.

FIG. 5B is a schematic of some exemplary embodiments of Raman filter 501 operable to remove Raman spectrum energy from a fiber system. As shown, Raman filter 501 includes propagation mode coupler 125 and a propagation mode filter 510. Propagation mode coupler 125 may have any of the attributes described above, and in this example is operable to couple the Raman component Iᵣ, propagated in the fundamental mode (e.g., LP₀₁) of fiber length 120, into one or more co-propagating, or counter-propagating, guided HOMs (e.g., LP₁₁) of fiber length 130. Being wavelength sensitive, propagation mode coupler 125 is to pass the signal component Iₛ, which is further propagated in the fundamental mode (e.g., LP₀₁) of fiber lengths 120 and 130. Propagation mode filter 510 is to guide the fundamental mode (e.g., LP₀₁) more efficiently than one or more co-propagating or counter-propagating higher-order modes (e.g., LP₁₁). For example, propagation mode filter 510 may be configured to strip from the fiber one or more HOMs in favor of fundamental mode propagation. For embodiments where propagation mode coupler 125 renders one of those HOMs the dominant mode of the Raman component Iᵣ, propagation mode filter 510 may strip, attenuate, or suppress the Raman component Iᵣ.

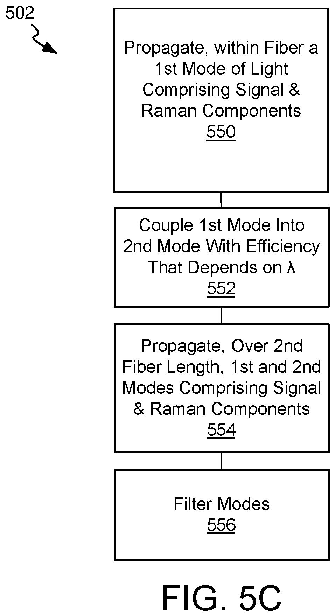

FIG. 5C is a flow chart illustrating methods 502 of selectively removing Raman spectrum energy from a fiber system. Methods 502 may be practiced by Raman filter 501, for example. At block 550, light comprising both signal and Raman components Iᵣ, Iₛ is guided in a first propagation mode of a fiber core. At block 552, the first propagation mode is coupled into one or more second propagation modes of the fiber core with a coupling efficiency that has a sufficient dependency upon wavelength to discriminate between the spectrums of the signal and Raman components Iᵣ, Iₛ. For example, coupling efficiency may peak near a center wavelength of the Raman spectrum and decline by half, or more, within 10nm of the center wavelength of the Raman spectrum). At block 554, light comprising both signal and Raman components Iᵣ, Iₛ is guided in multiple propagation modes of a fiber. At block 556, light is filtered in a manner that suppresses at least a dominant propagation mode of the Raman component Iᵣ and/or more efficiently guides a dominant propagation mode of the signal component Iₛ. Propagation mode filtering at block 556 may be according to any technique. Because of the wavelength dependence of the mode coupling at block 554, mode filtering at block 556 may be implemented with wavelength insensitive devices and/or techniques. Mode filtering may be achieved, for example with a fiber-based technique such as, but not limited to, fiber bends, fiber architecture transitions (e.g., SM-MM-SM transitions), fiber temperature modulation, and/or fiber strain (e.g., fiber stretching).

In some embodiments, mode filter 510 is a fiber mode filter comprising one or more lengths of fiber that selectively leak or lose higher-order modes. For some such embodiments, a propagation mode filter comprises fiber that has a sufficiently small bend radius over a sufficient bend length to lose significant energy from of a higher-order propagation mode conveying primarily Raman spectrum. Such bend losses may be a result of coupling a guided HOM to a non-guided (and thus lossy) mode of the fiber. For example, mode filter 510 may couple a guided HOM into a cladding mode or dissipation mode while the signal spectrum energy remains in the dominant lower-order propagation mode of the fiber core.

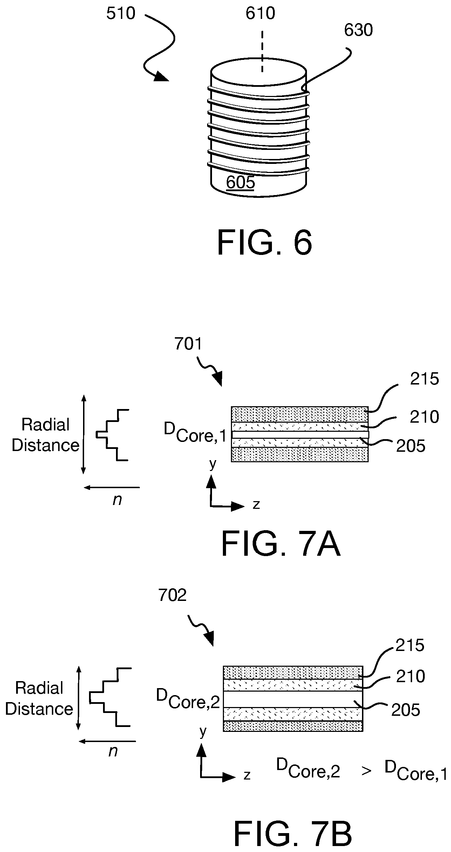

FIG. 6 illustrates an isometric view of a fiber mode filter 510 suitable for filtering HOM from a fundamental mode through bend losses, in accordance with some embodiments. Mode filter 510 includes a length of fiber 630 coiled about a mandrel 605 in either a two-dimensional (2D) form with bending occurring only about one axis of curvature, or a 3D form with bending in two orthogonal axes of curvature (not illustrated). Generally, bending losses are greater for modes orthogonal to the axis of curvature than for modes parallel to the axis of curvature. Mandrel 605 has a longitudinal axis 610 parallel to the axis of curvature and defines a fixed radius of curvature over the bend length. Fiber length 630 may be substantially as described above for fiber length 130 (e.g., a double clad, cylindrically symmetric RIP, etc.). Altematively, fiber length 630 may comprise fiber having properties particularly conducive to controlling HOM losses, such as but not limited to a polarization-maintaining (PM) core shape and/or cladding configuration. For example, fiber length 630 may have a rotationally asymmetric core, which is angularly rotated over fiber length 630, for example to ensure bending losses are experienced in orthogonally oriented higher-order modes. In a radially asymmetric fiber, the transverse refractive index depends not only on the radius *r,* but also on the azimuthal coordinate *φ.* In other words, the mode filter fiber may have an azimuthally asymmetric refractive-index profile. With polarization-maintenance, higher-order modes remain oriented relative to a reference core axis (e.g., major axis fiber 630) over the bend length. Angular rotation about the fiber axis (i.e., axial rotation) over the bend length would therefore rotate the mode density distribution in sync with the core orientation. In some embodiments, within mode filter 510 angular rotation of a PM fiber about the fiber axis is at least 90° over a bend length that attenuates all higher-order modes by some threshold (e.g., 3dB, 10dB, etc.). For further discussion of propagation mode filter design, the interested reader is referred to U.S. Pat. No. 8,711,471 and U.S. Pat. No. 9,917,410, for example.

Mode filter 510 may have any bend length required to attenuate higher-order modes conveying the Raman spectrum by some predetermined threshold (e.g., 3dB high-order modal suppression, 10dB, etc.). Depending on the coiling path, the bend length need not be continuous and may instead be accumulated by incremental bends separated by straight runs (e.g., as for a racetrack coiling path). To advantageously minimize bending loss incurred by the fundamental mode conveying the signal spectrum, the bend length may be minimized to achieve a minimum threshold of higher-order modal attenuation. Although fiber length 630 is multi-mode fiber capable of supporting multiple propagation modes, it can be rendered single mode through bend losses. Hence, even where fiber length 630 has the same properties as fiber length 130 described above, within mode filter 510 a single mode (e.g., LP₀₁, or any other dominant propagation mode of the signal component Iₛ) may be enforced over the bend length. Notably, Raman spectral energy may be removed over the entire bend length associated with mode filter 510. Mandrel 605 may further serve as a good heat sink, efficiently dissipating Raman spectral energy.

In some other embodiments, mode filter 510 is a fiber mode filter comprising one or fiber transitions such as, but not limited to a splice between two distinct fibers, or a more gradual transition of the type that may be implemented during a fiber draw or through some other post draw processing method (e.g., flame splicer, etc.). For such embodiments, the transition is to selectively block, leak, or otherwise lose, at least the higher-order propagation mode of the Raman component Iᵣ. For some embodiments, a propagation mode filter comprises transition between a first length of fiber and a second length of fiber. The first length of fiber is to support multiple propagation modes that include both the dominant mode of a Raman component Iᵣ, and the dominant mode of the signal component Iₛ. However, the second length of fiber is to be unable to support the dominant mode of the Raman component Iᵣ, and may, for example, support only the dominant mode conveying the signal component Iₛ.

FIG. 7A and 7B are cross-sectional views of two fiber lengths 701 and 702, respectively, each with the optical fiber axis in the plane of the page. As shown, fiber length 701 comprises a double-clad fiber having core 205, inner cladding 210 and outer cladding 215. For such double-clad fiber embodiments, fiber length 701 may have any of the attributes described above for fiber length 130, for example. Single clad fiber embodiments are also possible, as are triple-clad or any other multi-clad fiber design. As shown in FIG. 7A, fiber length 701 has a RIP that is cylindrically symmetric about the fiber axis with RI value n being highest within core 205, and stepped down to lower values in inner cladding 210 and outer cladding 215. As further shown in FIG. 7B, fiber length 702 also comprises a double-clad fiber having core 205, inner cladding 210 and outer cladding 215. For such double-clad fiber embodiments, fiber length 702 may also have any of the attributes described above for fiber length 130. Single clad, triple-clad or any other multi-clad fiber designs are therefore also suitable for fiber length 702. As shown in FIG. 7B, fiber length 702 has a RIP that is cylindrically symmetric about the fiber axis with RI value n being highest within core 205, and stepped down to lower values in inner cladding 210 and outer cladding 215.

In accordance with some embodiments not according to the claimed invention, fiber length 702 has a fiber architecture suitable for supporting multiple propagation modes within core 205, while fiber length 701 has a fiber architecture that is unable to support more than one propagation mode within core 205. In some such embodiments, within fiber length 702 core 205 has a dimension D_{core,2} that is larger than core dimension D_{core,1} of fiber length 701. A propagation mode filter may include both fiber lengths 701 and 702 with a transition between the two fiber lengths then operative as a filter of a higher-order mode that is the dominant propagation mode of the Raman component Iₛ propagated within a fiber system.

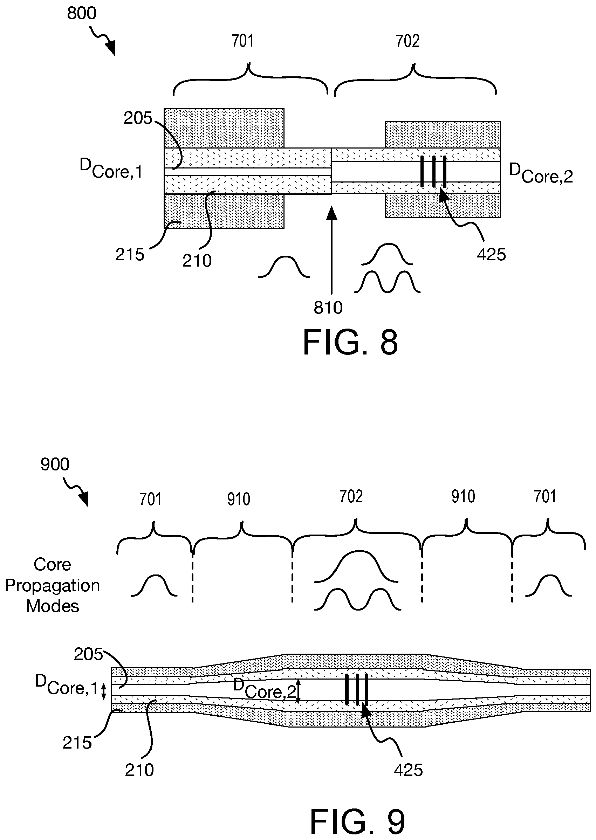

FIG. 8 depicts a cross-sectional view of a fiber device 800 that includes a differential fiber splice 810 between a single mode fiber length 701, and a multi-mode fiber length 702. Differential fiber splice 810 may be operable as mode filter 510 (FIG. 5B) where differences in the core (e.g., diameter and/or NA) force higher-order mode propagating within fiber length 702 to become lossy at the transition to fiber length 701. More specifically, fiber splice 810 is a differential core splice where some core light propagating as a higher-order core mode (e.g., LP₁₁) within fiber length 702 will couple into cladding modes and/or dissipation modes that enter inner cladding 210 within fiber length 701. Such cladding modes may propagate within inner cladding 210, and/or pass through inner cladding 210, and into (or through) outer cladding 215. Core light propagating as a fundamental core mode (e.g., LP₀₁) within fiber length 702 will however more efficiently couple into a fundamental core mode within fiber length 701 where it may continue to propagate as a guided mode.

In some further embodiments not according to the claimed invention, multi-mode fiber length 702 may further comprise a fiber propagation mode coupler, for example substantially as described elsewhere herein. Fiber device 800 may therefore be one implementation of fiber device 501, introduced above (FIG. 5B). In the example illustrated in FIG. 8, fiber length 702 further comprises fiber grating 425. In the context of fiber device 800, fiber grating 425 may have any of the attributes described elsewhere herein. For example, in the context of fiber device 800, fiber grating 425 may again be a short-period FBG, a LPFG, have a chirped and/or apodized architecture, and/or comprise a superstructure, etc. When fiber device 800 is inserted within a fiber system that otherwise comprises single-mode fiber, the resulting system may further comprise a second fiber transition that joins fiber length 702 within another length of single mode fiber. With proper launch into the MM fiber, signal spectrum propagated in the SM fibers can be maintained by the MM fiber so that one or more of the SM-MM-SM fiber transitions may combine with a mode coupler within the MM fiber to suppress higher-order Raman modes.

FIG. 9 depicts a cross-sectional view of a fiber device 900 comprising a tapered fiber length 910 that transitions between fiber length 701 that supports single mode propagation, and fiber length 702 that supports multi-mode propagation. Fiber lengths 701 and 702 may each be substantially as described above in the context of FIG. 7A, 7B, and 8. As illustrated in FIG. 9, fiber length 702 supports at least a fundamental core propagation mode (e.g., LP₀₁) as well as one or more HOMs (e.g., LP₁₁), while fiber length 701 supports only the fundamental core propagation mode. Tapered fiber length 910 has a core property (e.g., diameter and/or NA) that gradually (e.g., linearly) transitions between the core properties of fiber lengths 701 and 702. For the illustrated example, where the core diameter within tapered fiber length 910 linearly varies as a function of longitudinal position, a higher-order mode propagating within fiber length 702 may be expected to expand/contract within fiber length 910 where it eventually couples strongly into cladding modes of fiber length 701. As illustrated in FIG. 9, fiber length 701 is between two fiber lengths 702 with a tapered fiber length 910 surrounding fiber length 701. Such an architecture may allow for expansion and contraction of the fundamental mode. Other embodiments not according to the claimed invention with only one tapered fiber length 910 are also possible.

In the fiber device 900, multi-mode fiber length 702 further comprises a propagation mode coupler, which may have any of the attributes described above. Fiber device 900 may therefore be another implementation of fiber device 501 (FIG. 5B). In the example illustrated in FIG. 9, fiber length 702 further comprises fiber grating 425. In the context of fiber device 900, fiber grating 425 may have any of the attributes described elsewhere herein. For example, fiber grating 425 may again be a short-period FBG, a LPFG, have a chirped and/or apodized architecture, and/or comprise a superstructure, etc. When fiber device 900 is inserted within a fiber system that otherwise comprises single-mode fiber, that system may further comprise a second fiber transition that joins fiber length 702 within another length of single mode fiber. With proper launch into the MM fiber, signal spectrum propagated in the SM fibers can be maintained by the MM fiber so that one or more of the SM-MM-SM fiber transitions may combine with a mode coupler within the MM fiber to suppress higher-order Raman modes.

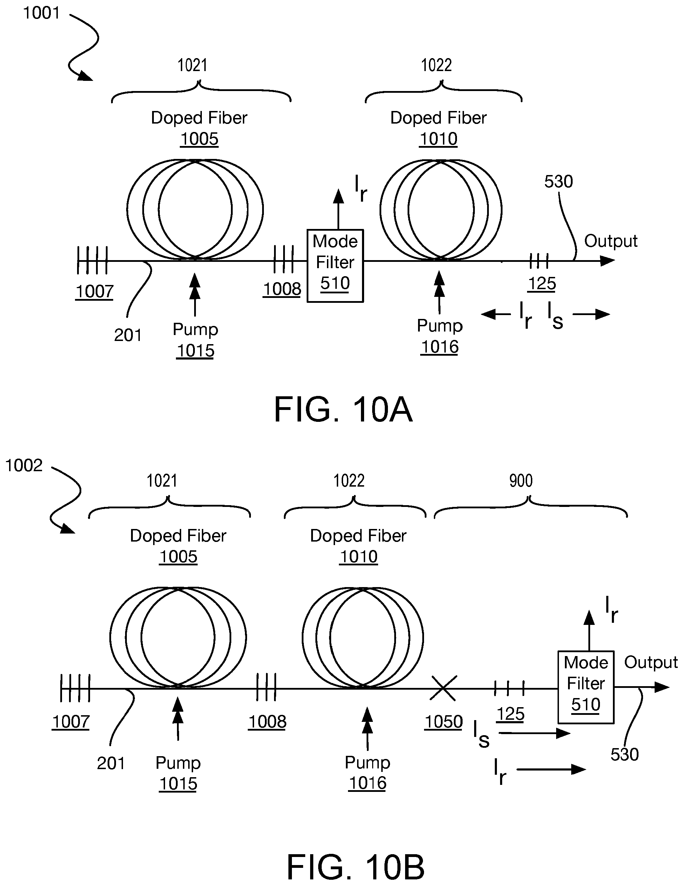

One or more of the fiber devices described above may be incorporated into a larger fiber system, for example one that includes a fiber resonator or cavity, and/or includes a fiber amplifier. FIG. 10A, for example, is a schematic of a fiber laser system 1001 that comprises both an optical resonator 1021, and an optical amplifier 1022. System 1001 further includes a Raman spectrum propagation mode coupler 125 suitable for selectively coupling Raman spectrum between propagation modes. Notably, in the presence of mode coupler 125, Raman spectrum in higher-order modes of laser system 1001 can be expected to have lower gain by the signal spectrum due to lower mode overlap. As such, mode coupler 125 may be employed with or without the further integration of propagation mode filter 510, which is suitable for selectively filtering those modes conveying Raman spectrum, in accordance with some further embodiments.

Fiber resonator 1021 is to generate an optical beam by exciting a signal spectrum of light. Resonator 1021 is defined by a strong fiber grating 1007 and a fiber-to-fiber coupler (FFC) 1008 with a doped fiber length 1005 therebetween. Doped fiber length 1005 may comprise a variety of materials, such as, SiO₂, SiO₂ doped with GeO₂, germanosilicate, phosphorus pentoxide, phosphosilicate, Al₂O₃, aluminosilicate, or the like, or any combinations thereof. In some embodiments, the dopants comprise rare-earth ions such as Er³⁺ (erbium), Yb³⁺(ytterbium), Nd³⁺(neodymium), Tm³⁺(thulium), Ho³⁺(holmium), or the like, or any combination thereof. Doped fiber length 1005 may comprise a multi-clad fiber, for example substantially as described above for fiber length 130. Doped fiber length 1005 may alternatively comprise a single-clad fiber, or any other fiber architecture known to be suitable for a fiber laser. Fiber resonator 1021 is optically coupled to a pump light source 1015, which may be a solid state diode laser, or lamp, for example. Pump light source 1015 may be coupled into a cladding layer of doped fiber 1005 in either a co-propagating or counter-propagating manner. In some embodiments not according to the claimed invention, doped fiber length 1005 comprises multi-mode fiber supporting multiple propagation modes within a fiber core (e.g., substantially as described above for fiber 130). However, in some alternative embodiments not according to the claimed invention doped fiber length 1005 comprises a single-mode fiber capable of supporting only one guided propagation mode within the fiber core.

Fiber amplifier 1022 is to intensify at least the signal spectrum excited by resonator 1021. Fiber amplifier 1022 is optically coupled to a pump light source 1016, which may also be a solid state diode laser, or lamp, for example. Fiber amplifier 1022 includes a doped fiber length 1010, which may have any of the properties described above for doped fiber length 1005. For example, in some embodiments, doped fiber length 1010 comprises rare-earth ions such as Er³⁺ (erbium), Yb³⁺(ytterbium), Nd³⁺(neodymium), Tm³⁺(thulium), Ho³⁺(holmium), or the like, or any combination thereof. Doped fiber length 1010 may comprise a multi-clad fiber, for example substantially as described above for fiber length 130. In some embodiments not according to the claimed invention, doped fiber length 1010 comprises a multi-mode fiber supporting multiple propagation modes within a fiber core (e.g., substantially as described above for fiber 130). In some advantageous embodiments not according to the claimed invention where doped fiber length 1005 comprises single-mode fiber operable to support only one guided propagation mode within the fiber core, and doped fiber length 1010 comprises a multi-mode fiber supporting multiple propagation modes within the fiber core, mode filter 510 may be implemented by a differential splice between doped fiber lengths 1005 and 1010, for example substantially as described for fiber device 800 (FIG. 8A-8B). Hence, fiber device 800 may be integrated directly into fiber system 1001 with the differential splice between a single-mode resonator 1021 and multi-mode amplifier 1022 functional as a mode filter suitable for filtering and/or suppressing Raman spectral energy. Alternatively, mode filter 510 may be implemented with tapered fiber transition, for example substantially as described for fiber device 900 (FIG. 9).

In some fiber systems including both a propagation mode coupler and a propagation mode filter, at least one of the mode coupler and mode filter is positioned between a resonator and an amplifier. In the example illustrated by FIG. 10A, mode filter 510 is positioned between resonator 1021 and amplifier 1022, while mode coupler 125 is within a length of multi-mode fiber on the amplifier side of mode filter 510. Such architecture is well-suited to a doped fiber length 1010 that comprises multi-mode fiber, as mode coupler 125 may then be fabricated directly within a portion of the multi-mode fiber (or a low-loss splice may join doped fiber length 1010 to another length of multi-mode fiber comprising mode coupler 125). When in the position illustrated in FIG. 10A, mode coupler 125 may advantageously be a short-period (Bragg) fiber grating such that Raman component Iᵣ may be reflected to counter propagate toward mode filter 510 while signal spectrum Iₛ may propagate within fiber length 530 toward an output of fiber system 1001 (e.g., a delivery fiber and/or process head, etc.).

FIG. 10B is a schematic of a fiber system 1002 comprising optical resonator 1021, optical amplifier 1022, Raman spectrum propagation mode coupler 125, and mode filter 510, in accordance with some alternative embodiments. Each component of fiber system 1002 may have any of the properties and/or attributes described elsewhere herein. As shown, fiber system 1002 has an architecture similar to that of fiber system 1001 with the exception that mode coupler 125 is separated from optical resonator 1021 by amplifier 1022. In this specific example, mode coupler 125 is between optical resonator 1021 and mode filter 510. Alternatively, mode filter 510 may be between optical amplifier 1021 and mode coupler 125. For the configuration illustrated, it may be advantageous for mode coupler 125 to be a LPFG, with Raman component Iᵣ then to be co-propagated with signal spectrum Iₛ to mode filter 510 where it is removed at least in part from system 1002. Signal spectrum Iₛ is to propagate within fiber length 530 toward an output of fiber system 1002 (e.g., a delivery fiber and/or process head, etc.). The configuration of system 1002 is well-suited, for example, to a fiber system in which resonator 1021 and amplifier 1022 are both single mode fiber devices (i.e., fibers 1005 and 1010 have single-mode architecture). Mode coupler 125 may then be fabricated within a portion of MM fiber that is joined to fiber length 1010, for example at a splice 1050. For the illustrated embodiments, splice 1050 joins fiber length 1010 to fiber device 900, which implements mode coupler 125 and mode filter 510, for example substantially as described in the context of FIG. 9.

## Claims

1. A fiber optic device (101), comprising:
a first length (120) of optical fiber comprising a core (205) and one or more cladding layers (210, 215), wherein the first length of optical fiber supports at least a first guided mode for light comprising both a signal spectrum and a Raman spectrum;
a second length (130) of optical fiber comprising a core and one or more cladding layers, wherein the second length of optical fiber supports multiple guided modes including the first guided mode and a second guided mode, the second guided mode being of a higher-order than the first guided mode, wherein the second optical fiber length is configured to propagate the signal spectrum predominantly in the first guided mode and the Raman spectrum predominantly in the other guided modes other than the first guided mode and the second optical fiber length is further configured to provide the Raman spectrum with lower gain from the signal spectrum as a result of lower overlap between the modes; and
a wavelength-sensitive propagation mode coupler (125) between the first and second lengths of fiber, the wavelength-sensitive propagation mode coupler configured to receive light from the first length of optical fiber and pass light that propagates in the second length of optical fiber, the light comprising a signal component and a Raman component spanning longer wavelengths than those in the signal component and having a wider band than the signal component wherein the wavelength-sensitive propagation mode coupler has a mode coupling efficiency over the Raman spectrum that is different from that over the signal spectrum;
the fiber optic device further comprising a propagation mode filter (510) distinct from the propagation mode coupler, the propagation mode filter coupled to receive the light from the second length of optical fiber, and to discriminate between the first and second guided modes and to increase propagation losses for the Raman spectrum, wherein the propagation mode filter (510) is configured to selectively route the Raman component to a destination different than that of the signal component that propagates within a third length (530) of optical fiber.

2. The fiber optic device of claim 1, wherein:
the Raman spectrum comprises one or more first wavelengths that are longer than one or more second wavelengths of the signal spectrum; and
the propagation mode filter (510) is configured to attenuate the second guided mode more than the first guided mode.

3. The fiber optic device of claim 1, wherein:
the first and second guided modes comprise linearly polarized, LP, modes;
the first guided mode is a fundamental LP mode; and
the second guided mode is an odd-ordered LP mode.

4. The fiber optic device of claim 1, wherein:
the wavelength-sensitive propagation mode coupler (125) comprises:
a length of optical fiber comprising a core and one or more cladding layers; and
a fiber grating, FG, within the core, the FG having a refractive index that varies over said length of optical fiber; and
preferably the FG has a refractive index that varies azimuthally within the core.

5. The fiber optic device of claim 4, wherein:
the FG is a long-period grating having a period greater than half of a center wavelength of the Raman spectrum; and
the FG is optically coupled between the propagation mode filter (510) and an optical resonator (1021), the optical resonator configured to excite at least the signal spectrum; or
the FG is a short-period grating having a period no longer than half of a center wavelength of the Raman spectrum; and
the mode filter (125) is optically coupled between the FG and an optical resonator (1021), the optical resonator (1021) to excite at least the signal spectrum.

6. The fiber optic device of claim 5, wherein the first length of optical fiber comprises the optical resonator (1021), said optical resonator (1021) supporting only the first guided mode;
and optionally,
the second length of optical fiber comprises a gain medium configured to excite at least the signal spectrum.

7. The fiber optic device of claim 1, wherein:
the propagation mode filter (510) comprises a transition between a multi-mode fiber and a single-mode fiber; and optionally
the transition comprises a differential core splice.

8. A fiber system (1001), comprising:
a laser configured to generate an optical beam when energized; and
the fiber optic device of any of claims 1 to 7.

9. The fiber system of claim 8, with the fiber optic device of claim 2 or 3 , wherein:
the wavelength-sensitive propagation mode coupler (125) comprises a Fiber Bragg Grating, FBG, having a refractive index that varies over a third length of optical fiber; and
the propagation mode filter (510) is a fiber mode filter that is configured to guide a fundamental mode more efficiently than one or more higher-order modes.

10. A method (100) of filtering a Raman spectrum from a fiber system, the method comprising:
propagating (105) a first guided mode of light in a first optical fiber length of the system, the first optical fiber length comprising a core and one or more cladding layers, and the light comprising both a signal spectrum and the Raman spectrum;
using a wavelength-sensitive propagation mode coupler, receiving light from the first optical fiber length
and passing light propagating in a second length of optical fiber, the light comprising a signal component and a Raman component spanning longer wavelengths than those in the signal component and having a wider band than the signal component, the second guided mode being of a higher-order than the first guided mode, wherein a mode coupling efficiency is higher over the Raman spectrum than over the signal spectrum;
propagating (115) first and second guided modes in the second optical fiber length of the system, the second optical fiber length comprising a core and one or more cladding layers, wherein the propagating comprises propagating the signal spectrum predominantly in the first guided mode through the second optical fiber length and propagating the Raman spectrum through the second optical fiber length predominantly in a mode other than the first guided mode and providing the Raman spectrum with lower gain from the signal spectrum as a result of lower overlap between the modes; and
using a mode filter that is distinct from the wavelength-sensitive mode coupler, filtering the light in a manner that discriminates between the first and second guided modes and increases propagation losses for the Raman spectrum and selectively routing the Raman component to a destination different than that of the signal component propagating within a third length (530) of optical fiber.

11. The method of claim 10, wherein:
coupling at least some of the light comprises coupling the Raman spectrum more efficiently than the signal spectrum; and
guiding the first guided mode in a core of the second optical fiber length more efficiently than the second guided mode.

12. The method of claim 10, wherein:
the first guided mode is a fundamental LP mode;
the second guided mode is an odd-ordered LP mode; and
coupling at least some of the light comprises:
propagating the light in a third length of optical fiber comprising a core and one or more cladding layers, the third length of optical fiber comprising a fiber grating, FG, within the core, and
the FG having a refractive index that varies over the third length of optical fiber.

13. The method of claim 12, wherein the FG is a long period grating having a period greater than half of one or more wavelengths in the Raman spectrum,
or wherein the FG is a short period grating having a period no longer than half of one or more wavelengths in the Raman spectrum.

## Patentansprüche

1. Eine faseroptische Vorrichtung (101), die Folgendes beinhaltet:
eine erste Länge (120) einer optischen Faser, die einen Kern (205) und eine oder mehrere Mantelschichten (210, 215) beinhaltet, wobei die erste Länge der optischen Faser mindestens einen ersten geführten Modus für Licht unterstützt, das sowohl ein Signalspektrum als auch ein Raman-Spektrum beinhaltet;
eine zweite Länge (130) einer optischen Faser, die einen Kern und eine oder mehrere Mantelschichten beinhaltet, wobei die zweite Länge der optischen Faser mehrere geführte Modi unterstützt, einschließlich des ersten geführten Modus und eines zweiten geführten Modus, wobei der zweite geführte Modus eine höhere Ordnung als der erste geführte Modus aufweist, wobei die zweite Länge der optischen Faser konfiguriert ist, um das Signalspektrum vorwiegend in dem ersten geführten Modus und das Raman-Spektrum vorwiegend in den anderen geführten Modi außer dem ersten geführten Modus auszubreiten, und die zweite Länge der optischen Faser ferner konfiguriert ist, um das Raman-Spektrum mit einer geringeren Verstärkung aus dem Signalspektrum als Ergebnis einer geringeren Überlappung zwischen den Modi bereitzustellen; und
einen wellenlängenempfindlichen Ausbreitungsmoduskoppler (125) zwischen der ersten und der zweiten Länge der Faser, wobei der wellenlängenempfindliche Ausbreitungsmoduskoppler konfiguriert ist, um Licht von der ersten Länge der optischen Faser zu empfangen und Licht durchzulassen, das sich in der zweiten Länge der optischen Faser ausbreitet, wobei das Licht eine Signalkomponente und eine Raman-Komponente beinhaltet, wobei diese längere Wellenlängen als jene in der Signalkomponente überspannt und ein breiteres Band als die Signalkomponente aufweist, wobei der wellenlängenempfindliche Ausbreitungsmoduskoppler eine Moduskopplungseffizienz über das Raman-Spektrum aufweist, die sich von jener über das Signalspektrum unterscheidet;
wobei die faseroptische Vorrichtung ferner einen Ausbreitungsmodusfilter (510) beinhaltet, der sich von dem Ausbreitungsmoduskoppler unterscheidet, wobei der Ausbreitungsmodusfilter so gekoppelt ist, dass er das Licht von der zweiten Länge der optischen Faser empfängt und zwischen dem ersten und dem zweiten geführten Modus unterscheidet und Ausbreitungsverluste für das Raman-Spektrum erhöht, wobei der Ausbreitungsmodusfilter (510) konfiguriert ist, um die Raman-Komponente selektiv zu einem Ziel zu leiten, das sich von jenem der Signalkomponente unterscheidet, die sich innerhalb einer dritten Länge (530) der optischen Faser ausbreitet.

2. Faseroptische Vorrichtung gemäß Anspruch 1, wobei:
das Raman-Spektrum eine oder mehrere erste Wellenlängen beinhaltet, die länger als eine oder mehrere zweite Wellenlängen des Signalspektrums sind; und
der Ausbreitungsmodusfilter (510) konfiguriert ist, um den zweiten geführten Modus stärker als den ersten geführten Modus zu dämpfen.

3. Faseroptische Vorrichtung gemäß Anspruch 1, wobei:
der erste und der zweite geführte Modus linear polarisierte, LP, Modi beinhalten;
der erste geführte Modus ein fundamentaler LP-Modus ist; und
der zweite geführte Modus ein LP-Modus ungerader Ordnung ist.

4. Faseroptische Vorrichtung gemäß Anspruch 1, wobei:
der wellenlängenempfindliche Ausbreitungsmoduskoppler (125) Folgendes beinhaltet:
eine Länge einer optischen Faser, die einen Kern und eine oder mehrere Mantelschichten beinhaltet; und
ein Fasergitter, FG, innerhalb des Kerns, wobei das FG einen Brechungsindex aufweist, der über diese Länge der optischen Faser variiert; und
vorzugsweise weist das FG einen Brechungsindex auf, der innerhalb des Kerns azimutal variiert.

5. Faseroptische Vorrichtung gemäß Anspruch 4, wobei:
das FG ein Langperiodengitter ist, das eine Periode aufweist, die größer als die Hälfte einer Mittenwellenlänge des Raman-Spektrums ist; und
das FG optisch zwischen dem Ausbreitungsmodusfilter (510) und einem optischen Resonator (1021) gekoppelt ist, wobei der optische Resonator dazu konfiguriert ist, mindestens das Signalspektrum anzuregen; oder
das FG ein Kurzperiodengitter ist, das eine Periode aufweist, die nicht länger als die Hälfte einer Mittenwellenlänge des Raman-Spektrums ist; und
der Modusfilter (125) optisch zwischen dem FG und einem optischen Resonator (1021) gekoppelt ist, wobei der optische Resonator (1021) mindestens das Signalspektrum anzuregen.

6. Faseroptische Vorrichtung gemäß Anspruch 5, wobei die erste Länge der optischen Faser den optischen Resonator (1021) beinhaltet, wobei der optische Resonator (1021) nur den ersten geführten Modus unterstützt;
und optional,
die zweite Länge der optischen Faser ein Verstärkungsmedium beinhaltet, das konfiguriert ist, um mindestens das Signalspektrum anzuregen.

7. Faseroptische Vorrichtung gemäß Anspruch 1, wobei:
der Ausbreitungsmodusfilter (510) einen Übergang zwischen einer Multimodefaser und einer Monomodefaser beinhaltet; und optional
der Übergang einen differentiellen Kernspleiß beinhaltet.

8. Ein Fasersystem (1001), das Folgendes beinhaltet:
einen Laser, der konfiguriert ist, um einen optischen Strahl zu erzeugen, wenn er mit Energie versorgt wird; und
die faseroptische Vorrichtung gemäß einem der Ansprüche 1 bis 7.

9. Fasersystem gemäß Anspruch 8, mit der faseroptischen Vorrichtung gemäß Anspruch 2 oder 3, wobei:
der wellenlängenempfindliche Ausbreitungsmoduskoppler (125) ein Faser-Bragg-Gitter, FBG, beinhaltet, das einen Brechungsindex aufweist, der über eine dritte Länge der optischen Faser variiert; und
der Ausbreitungsmodusfilter (510) ein Fasermodusfilter ist, der konfiguriert ist, um einen fundamentalen Modus effizienter als einen oder mehrere Modi höherer Ordnung zu führen.

10. Ein Verfahren (100) zum Filtern eines Raman-Spektrums aus einem Fasersystem, wobei das Verfahren Folgendes beinhaltet:
Ausbreitenlassen (105) eines ersten geführten Modus von Licht in einer ersten Länge der optischen Faser des Systems, wobei die erste Länge der optischen Faser einen Kern und eine oder mehrere Mantelschichten beinhaltet und das Licht sowohl ein Signalspektrum als auch das Raman-Spektrum beinhaltet;
Verwenden eines wellenlängenempfindlichen Ausbreitungsmoduskopplers, Empfangen von Licht von der ersten Länge der optischen Faser und Durchlassen von Licht, das sich in einer zweiten Länge der optischen Faser ausbreitet, wobei das Licht eine Signalkomponente und eine Raman-Komponente beinhaltet, wobei diese längere Wellenlängen als jene in der Signalkomponente überspannt und ein breiteres Band als die Signalkomponente aufweist, wobei der zweite geführte Modus eine höhere Ordnung als der erste geführte Modus aufweist, wobei eine Moduskopplungseffizienz über das Raman-Spektrum höher als über das Signalspektrum ist;
Ausbreitenlassen (115) eines ersten und eines zweiten geführten Modus in der zweiten Länge der optischen Faser des Systems, wobei die zweite Länge der optischen Faser einen Kern und eine oder mehrere Mantelschichten beinhaltet, wobei das Ausbreiten das Ausbreiten des Signalspektrums vorwiegend in dem ersten geführten Modus durch die zweite Länge der optischen Faser und das Ausbreiten des Raman-Spektrums durch die zweite Länge der optischen Faser vorwiegend in einem anderen Modus als dem ersten geführten Modus und das Bereitstellen des Raman-Spektrums mit einer geringeren Verstärkung aus dem Signalspektrum als Ergebnis einer geringeren Überlappung zwischen den Modi beinhaltet; und
Verwenden eines Modusfilters, der sich von dem wellenlängenempfindlichen Moduskoppler unterscheidet, Filtern des Lichts auf eine Weise, die zwischen dem ersten und dem zweiten geführten Modus unterscheidet und Ausbreitungsverluste für das Raman-Spektrum erhöht, und selektives Leiten der Raman-Komponente zu einem Ziel, das sich von jenem der Signalkomponente unterscheidet, die sich innerhalb einer dritten Länge (530) der optischen Faser ausbreitet.

11. Verfahren gemäß Anspruch 10, wobei:
das Koppeln mindestens eines Teils des Lichts beinhaltet, das Raman-Spektrum effizienter als das Signalspektrum zu koppeln; und
das Führen des ersten geführten Modus in einem Kern der zweiten Länge der optischen Faser effizienter erfolgt als das Führen des zweiten geführten Modus.

12. Verfahren gemäß Anspruch 10, wobei:
der erste geführte Modus ein fundamentaler LP-Modus ist;
der zweite geführte Modus ein LP-Modus ungerader Ordnung ist; und
das Koppeln mindestens eines Teils des Lichts Folgendes beinhaltet:
Ausbreiten des Lichts in einer dritten Länge einer optischen Faser, die einen Kern und eine oder mehrere Mantelschichten beinhaltet, wobei die dritte Länge der optischen Faser ein Fasergitter, FG, innerhalb des Kerns beinhaltet, und
wobei das FG einen Brechungsindex aufweist, der über die dritte Länge der optischen Faser variiert.

13. Verfahren gemäß Anspruch 12, wobei das FG ein Langperiodengitter ist, das eine Periode aufweist, die größer als die Hälfte einer oder mehrerer Wellenlängen im Raman-Spektrum ist,
oder wobei das FG ein Kurzperiodengitter ist, das eine Periode aufweist, die nicht länger als die Hälfte einer oder mehrerer Wellenlängen im Raman-Spektrum ist.

## Revendications

1. Un dispositif à fibres optiques (101), comprenant :
une première longueur (120) de fibre optique comprenant un cœur (205) et une ou
plusieurs couches de gaine (210, 215), dans lequel la première longueur de fibre optique supporte au moins un premier mode guidé pour de la lumière comprenant à la fois un spectre de signal et un spectre Raman ;
une deuxième longueur (130) de fibre optique comprenant un cœur et une ou plusieurs couches de gaine, dans lequel la deuxième longueur de fibre optique supporte de multiples modes guidés incluant le premier mode guidé et un deuxième mode guidé, le deuxième mode guidé étant d'un ordre plus élevé que le premier mode guidé, dans lequel la deuxième longueur de fibre optique est configurée pour propager le spectre de signal de manière prédominante dans le premier mode guidé et le spectre Raman de manière prédominante dans les autres modes guidés autres que le premier mode guidé et la deuxième longueur de fibre optique est en outre configurée pour fournir au spectre Raman un gain plus faible par rapport au spectre de signal en conséquence d'un chevauchement plus faible entre les modes ; et
un coupleur de modes de propagation sensible à la longueur d'onde (125) entre les première et deuxième longueurs de fibre, le coupleur de modes de propagation sensible à la longueur d'onde étant configuré pour recevoir de la lumière en provenance de la première longueur de fibre optique et laisser passer de la lumière qui se propage dans la deuxième longueur de fibre optique, la lumière comprenant une composante de signal et une composante Raman couvrant des longueurs d'onde plus longues que celles dans la composante de signal et ayant une bande plus large que celle de la composante de signal dans lequel le coupleur de modes de propagation sensible à la longueur d'onde a une efficacité de couplage de modes sur le spectre Raman qui est différente de celle sur le spectre de signal ;
le dispositif à fibres optiques comprenant en outre un filtre de modes de propagation (510) distinct du coupleur de modes de propagation, le filtre de modes de propagation étant couplé pour recevoir la lumière en provenance de la deuxième longueur de fibre optique, et pour établir une discrimination entre les premier et deuxième modes guidés et pour accroître des pertes de propagation pour le spectre Raman, dans lequel le filtre de modes de propagation (510) est configuré pour acheminer sélectivement la composante Raman jusqu'à une destination différente de celle de la composante de signal qui se propage au sein d'une troisième longueur (530) de fibre optique.

2. Le dispositif à fibres optiques de la revendication 1, dans lequel :
le spectre Raman comprend une ou plusieurs premières longueurs d'onde qui sont plus longues qu'une ou plusieurs deuxièmes longueurs d'onde du spectre de signal ; et
le filtre de modes de propagation (510) est configuré pour atténuer le deuxième mode guidé davantage que le premier mode guidé.

3. Le dispositif à fibres optiques de la revendication 1, dans lequel :
les premier et deuxième modes guidés comprennent des modes linéairement polarisés, LP ;
le premier mode guidé est un mode **LP** fondamental ; et
le deuxième mode guidé est un mode **LP** d'ordre impair.

4. Le dispositif à fibres optiques de la revendication 1, dans lequel :
le coupleur de modes de propagation sensible à la longueur d'onde (125) comprend :
une longueur de fibre optique comprenant un coeur et une ou plusieurs couches de gaine ; et
un réseau de fibres (*fiber grating*), FG, au sein du coeur, le FG ayant un indice de réfraction qui varie sur ladite longueur de fibre optique ; et
de préférence, le FG a un indice de réfraction qui varie de manière azimutale au sein du coeur.

5. Le dispositif à fibres optiques de la revendication 4, dans lequel :
le FG est un réseau à longue période ayant une période supérieure à la moitié d'une longueur d'onde centrale du spectre Raman ; et
le FG est optiquement couplé entre le filtre de modes de propagation (510) et un résonateur optique (1021), le résonateur optique étant configuré pour exciter au moins le spectre de signal ; ou
le FG est un réseau à courte période ayant une période pas plus longue que la moitié d'une longueur d'onde centrale du spectre Raman ; et
le filtre de modes (125) est optiquement couplé entre le FG et un résonateur optique (1021), le résonateur optique (1021) pour exciter au moins le spectre de signal.

6. Le dispositif à fibres optiques de la revendication 5, dans lequel la première longueur de fibre optique comprend le résonateur optique (1021), ledit résonateur optique (1021) supportant uniquement le premier mode guidé ;
et facultativement,
la deuxième longueur de fibre optique comprend un milieu de gain configuré pour exciter au moins le spectre de signal.

7. Le dispositif à fibres optiques de la revendication 1, dans lequel :
le filtre de modes de propagation (510) comprend une transition entre une fibre multimodale et une fibre monomodale ; et facultativement
la transition comprend une épissure de cœur différentielle.

8. Un système de fibres (1001), comprenant :
un laser configuré pour générer un faisceau optique lorsqu'il est alimenté ; et
le dispositif à fibres optiques de n'importe lesquelles des revendications 1 à 7.

9. Le système de fibres de la revendication 8, avec le dispositif à fibres optiques de la revendication 2 ou de la revendication 3, dans lequel :
le coupleur de modes de propagation sensible à la longueur d'onde (125) comprend un Réseau de fibres de Bragg *(Fiber Bragg Grating*), FBG, ayant un indice de réfraction qui varie sur une troisième longueur de fibre optique ; et
le filtre de modes de propagation (510) est un filtre de modes de fibre qui est configuré pour guider un mode fondamental plus efficacement qu'un ou plusieurs modes d'ordre plus élevé.

10. Un procédé (100) de filtrage d'un spectre Raman à partir d'un système de fibres, le procédé comprenant :
le fait de propager (105) un premier mode guidé de lumière dans une première longueur de fibre optique du système, la première longueur de fibre optique comprenant un cœur et une ou plusieurs couches de gaine, et la lumière comprenant à la fois un spectre de signal et le spectre Raman ;
le fait d'utiliser un coupleur de modes de propagation sensible à la longueur d'onde, recevant de la lumière en provenance de la première longueur de fibre optique et laissant passer de la lumière se propageant dans une deuxième longueur de fibre optique, la lumière comprenant une composante de signal et une composante Raman couvrant des longueurs d'onde plus longues que celles dans la composante de signal et ayant une bande plus large que celle de la composante de signal, le deuxième mode guidé étant d'un ordre plus élevé que le premier mode guidé, dans lequel une efficacité de couplage de modes est plus élevée sur le spectre Raman que sur le spectre de signal ;
le fait de propager (115) des premier et deuxième modes guidés dans la deuxième longueur de fibre optique du système, la deuxième longueur de fibre optique comprenant un cœur et une ou plusieurs couches de gaine, dans lequel la propagation comprend le fait de propager le spectre de signal de manière prédominante dans le premier mode guidé sur la deuxième longueur de fibre optique et le fait de propager le spectre Raman sur la deuxième longueur de fibre optique de manière prédominante dans un mode autre que le premier mode guidé et le fait de fournir au spectre Raman un gain plus faible par rapport au spectre de signal en conséquence d'un chevauchement plus faible entre les modes ; et
le fait d'utiliser un filtre de modes qui est distinct du coupleur de modes sensible à la longueur d'onde, filtrant la lumière d'une manière qui établit une discrimination entre les premier et deuxième modes guidés et accroît des pertes de propagation pour le spectre Raman et acheminant sélectivement la composante Raman jusqu'à une destination différente de celle de la composante de signal se propageant au sein d'une troisième longueur (530) de fibre optique.

11. Le procédé de la revendication 10, dans lequel :
le fait de coupler au moins une partie de la lumière comprend le fait de coupler le spectre Raman plus efficacement que le spectre de signal ; et
le fait de guider le premier mode guidé dans un cœur de la deuxième longueur de fibre optique plus efficacement que le deuxième mode guidé.

12. Le procédé de la revendication 10, dans lequel :
le premier mode guidé est un mode LP fondamental ;
le deuxième mode guidé est un mode LP d'ordre impair ; et
le fait de coupler au moins une partie de la lumière comprend :
le fait de propager la lumière dans une troisième longueur de fibre optique comprenant un cœur et une ou plusieurs couches de gaine, la troisième longueur de fibre optique comprenant un réseau de fibres, FG, au sein du cœur, et
le FG ayant un indice de réfraction qui varie sur la troisième longueur de fibre optique.

13. Le procédé de la revendication 12, dans lequel le FG est un réseau à longue période ayant une période supérieure à la moitié d'une ou de plusieurs longueurs d'onde dans le spectre Raman,
ou dans lequel le FG est un réseau à courte période ayant une période pas plus longue que la moitié d'une ou de plusieurs longueurs d'onde dans le spectre Raman.
